# EUROPÄISCHE PATENTSCHRIFT

(11) **EP 2 246 543 B1**
(45) Veröffentlichungstag und Bekanntmachung des Hinweises auf die Patenterteilung: **04.09.2013**
(21) Anmeldenummer: 09157069.7
(22) Anmeldetag: 01.04.2009
(51) Int. Cl.: F02B 37/007, F02B 37/02, F02B 37/18, F01N 13/10, F02F 1/24, F02F 1/42, F02B 37/00

(54) **Zylinderkopf mit zwei Abgaskrümmern und Verfahren zum Betreiben einer Brennkraftmaschine mit einem derartigen Zylinderkopf**
Cylinder head with two exhaust manifolds and method to operate an internal combustion engine with such a cylinder head
Culasse comprenant deux collecteurs d'échappement et procédé destiné au fonctionnement d'un moteur à combustion interne comprenant une telle culasse

(43) Veröffentlichungstag der Anmeldung: 03.11.2010
(73) Patentinhaber: Ford Global Technologies, LLC, Dearborn, MI 48126 (US)
(72) Erfinder: Schorn, Norbert, 52080, Aachen (DE); Kindl, Helmut, 6291 CD Vaals (NL); Smiljanovski, Vanco, 50181, Bedburg (DE); Spaeder, Uwe, 52072, Aachen (DE); Stalman, Rob, 52538, Selfkant (DE)
(74) Vertreter: Drömer, Hans-Carsten

(56) Entgegenhaltungen:
- WO-A-99/19613
- WO-A-2008/056242
- DE-A1- 19 826 355
- GB-A- 1 164 018
- JP-A- 4 311 630
- US-A1- 2008 047 262

## Beschreibung

Die Erfindung betrifft einen Zylinderkopf mit mindestens vier Zylindern, wobei jeder Zylinder mindestens eine Auslaßöffnung zum Abführen der Abgase aus dem Zylinder aufweist und sich an jede Auslaßöffnung eine Abgasleitung anschließt, bei dem
- mindestens vier Zylinder in der Art konfiguriert sind, dass sie zwei Gruppen mit jeweils mindestens zwei Zylindern bilden, und
- die Abgasleitungen der Zylinder jeder Zylindergruppe unter Ausbildung eines Abgaskrümmers innerhalb des Zylinderkopfes jeweils zu einer Gesamtabgasleitung zusammenführen.

Des Weiteren betrifft die Erfindung ein Verfahren zum Betreiben einer Brennkraftmaschine mit einem derartigen Zylinderkopf.

Die internationale Anmeldung WO 99/19613 beschreibt einen Zylinderkopf mit vier Zylindern, die in der oben genannten Weise konfiguriert sind, d.h. zwei Gruppen mit jeweils zwei Zylindern bilden, und deren Abgasleitungen gruppenweise jeweils zu einer Gesamtabgasleitung zusammenführen. Die Abgaskrümmer der beiden Zylindergruppen sind miteinander verbindbar.

Die internationale Anmeldung WO 2008/056242 offenbart einen Zylinderkopf mit sechs Zylindern, die zwei Gruppen bilden und deren Abgasleitungen gruppenweise unter Ausbildung eines integrierten Abgaskrümmers innerhalb des Zylinderkopfes jeweils zu einer Gesamtabgasleitung zusammenführen. Die Abgaskrümmer der beiden Zylindergruppen sind außerhalb des Zylinderkopfes kontinuierlich miteinander verbunden.

Die US 2008/0047262 A1 beschreibt einen Zylinderkopf der oben stehenden Art, bei dem die Abgaskrümmer der beiden Zylindergruppen kontinuierlich via Verbindungsleitung miteinander verbunden sind, wobei die Verbindungsleitung im Zylinderkopf integriert ist.

Im Rahmen der vorliegenden Erfindung umfaßt der Begriff Brennkraftmaschine insbesondere Dieselmotoren, aber auch Ottomotoren und Hybrid-Brennkraftmaschinen.

Brennkraftmaschinen verfügen über einen Zylinderblock und einen Zylinderkopf, die zur Ausbildung der Zylinder miteinander verbunden werden. Der Zylinderkopf dient üblicherweise zur Aufnahme des Ventiltriebs. Um den Ladungswechsel zu steuern, benötigt eine Brennkraftmaschine Steuerorgane - in der Regel in Gestalt von Ventilen - und Betätigungseinrichtungen zur Betätigung dieser Steuerorgane. Der für die Bewegung der Ventile erforderliche Ventilbetätigungsmechanismus einschließlich der Ventile selbst wird als Ventiltrieb bezeichnet. Im Rahmen des Ladungswechsels erfolgt das Ausschieben der Verbrennungsgase über die Auslaßöffnungen der mindestens vier Zylinder und das Füllen der Brennräume, d.h. das Ansaugen des Frischgemisches bzw. der Frischluft über die Einlaßöffnungen.

Die Einlaßkanäle, die zu den Einlaßöffnungen führen, und die Auslaßkanäle, d.h. Abgasleitungen, die sich an die Auslaßöffnungen anschließen, sind nach dem Stand der Technik zumindest teilweise im Zylinderkopf integriert. Die Abgasleitungen der Zylinder werden in der Regel zu einer gemeinsamen Gesamtabgasleitung oder aber gruppenweise zu zwei oder mehreren Gesamtabgasleitungen zusammengeführt. Die Zusammenführung von Abgasleitungen zu einer Gesamtabgasleitung wird im Allgemeinen und im Rahmen der vorliegenden Erfindung als Abgaskrümmer bezeichnet, wobei das Teilstück der Gesamtabgasleitung, welches stromaufwärts einer in der Gesamtabgasleitung angeordneten Turbine liegt, vorliegend, d. h. erfindungsgemäß als zum Abgaskrümmer gehörend angesehen wird.

Die konkrete Konfiguration der Abgasleitungen der mindestens vier Zylinder im Rahmen einer Zusammenführung der Abgasleitungen hängt davon ab, welcher Betriebsbereich bei der Auslegung der Brennkraftmaschine Priorität hat, d. h. hinsichtlich welcher Betriebsbereiche das Betriebsverhalten der Brennkraftmaschine optimiert werden soll.

Bei aufgeladenen Brennkraftmaschinen, die auf der Abgasseite mit mindestens einer Turbine ausgestattet sind und die im unteren Drehzahl bzw. Lastbereich, d. h. bei kleineren Abgasmengen ein zufriedenstellendes Betriebsverhalten aufweisen sollen, wird eine sogenannte Stoßaufladung angestrebt.

Dabei sollen die - insbesondere während des Ladungswechsels - im Abgasabführsystem ablaufenden dynamischen Wellenvorgänge zum Zwecke der Aufladung und zur Verbesserung des Betriebsverhaltens der Brennkraftmaschine ausgenutzt werden.

Die Evakuierung der Verbrennungsgase aus einem Zylinder der Brennkraftmaschine im Rahmen des Ladungswechsels beruht im Wesentlichen auf zwei unterschiedlichen Mechanismen. Wenn sich zu Beginn des Ladungswechsels das Auslaßventil nahe des unteren Totpunktes öffnet, strömen die Verbrennungsgase aufgrund des gegen Ende der Verbrennung im Zylinder vorherrschenden hohen Druckniveaus und der damit verbundenen hohen Druckdifferenz zwischen Brennraum und Abgasleitung mit hoher Geschwindigkeit durch die Auslaßöffnung in das Abgassystem. Dieser druckgetriebene Strömungsvorgang wird durch eine hohe Druckspitze begleitet, die auch als Vorauslaßstoß bezeichnet wird und sich entlang der Abgasleitung mit Schallgeschwindigkeit fortpflanzt, wobei sich der Druck mit zunehmender Wegstrecke infolge Reibung mehr oder weniger stark abbaut, d. h. verringert. Im weiteren Verlauf des Ladungswechsels gleichen sich die Drücke im Zylinder und in der Abgasleitung an, so dass die Verbrennungsgase primär nicht mehr druckgetrieben evakuiert, sondern infolge der Hubbewegung des Kolbens ausgeschoben werden.

Bei niedrigen Lasten bzw. Drehzahlen, d. h. geringen Abgasmengen kann der Vorauslaßstoß in vorteilhafter Weise zur Stoßaufladung genutzt werden, womit auch hohe Turbinendruckverhältnisse bei niedrigen Turbinendrehzahlen erzielt werden können. Bei Verwendung der Turbine im Rahmen einer Abgasturboaufladung können auf diese Weise auch bei nur geringen Abgasmengen, d.h. niedrigen Lasten bzw. Drehzahlen hohe Ladedruckverhältnisse d.h. hohe Ladedrücke generiert werden.

Die Stoßaufladung erweist sich als besonders vorteilhaft bei der Beschleunigung des Turbinenlaufrades, d. h. bei der Erhöhung der Turbinendrehzahl, die im Leerlaufbetrieb der Brennkraftmaschine bzw. bei geringer Last spürbar absinken kann und häufig bei erhöhter Lastanforderung mittels Abgasstrom möglichst verzögerungsfrei wieder angehoben werden soll. Die Trägheit des Laufrades und die Reibung in der Wellenlagerung verzögern in der Regel eine Beschleunigung des Laufrades auf höhere Drehzahlen und damit einen unmittelbaren Anstieg des Ladedrucks.

Um die im Abgasabführsystem ablaufenden dynamischen Wellenvorgänge, insbesondere die Vorauslaßstöße, für die Aufladung und zur Verbesserung des Betriebsverhaltens der Brennkraftmaschine nutzen zu können, müssen die Druckspitzen bzw. Vorauslaßstöße im Abgassystem erhalten werden. Vorteilhaft ist es insbesondere, wenn sich die Druckschwankungen in den Abgasleitungen verstärken, zumindest aber nicht gegenseitig abschwächen bzw. aufheben.

Zielführend ist es dabei, die Abgasleitungen bzw. Zylinder in einer Weise zu gruppieren, dass die hohen Drücke, insbesondere die Vorauslaßstöße der einzelnen Zylinder, im Abgasabführsystem erhalten werden.

Ein Zylinderkopf, bei dem die Zylinder gruppiert sind, ist auch Gegenstand der vorliegenden Erfindung. Erfindungsgemäß sind mindestens vier Zylinder in der Art konfiguriert, dass sie zwei Gruppen mit jeweils mindestens zwei Zylindern bilden. Die Abgasleitungen der Zylinder jeder Zylindergruppe führen unter Ausbildung eines Abgaskrümmers jeweils zu einer Gesamtabgasleitung zusammen, und zwar vorzugsweise in der Art, dass sich die dynamischen Wellenvorgänge in den Abgasleitungen einer Zylindergruppe möglichst wenig nachteilig beeinflussen.

Bei einem Zylinderkopf mit vier in Reihe angeordneten Zylindern ist es diesbezüglich vorteilhaft, zwei Zylinder, die einen Zündabstand von 360°KW aufweisen, jeweils zu einer Zylindergruppe zusammen zu fassen.

Die Stoßaufladung hat auch Nachteile. So verschlechtert sich in der Regel der Ladungswechsel infolge der Druckschwankungen im Abgassystem. Die Zylinder behindern d.h. beeinträchtigen sich beim Ladungswechsel d. h. beim Evakuieren der Abgase gegenseitig, da sich die Druckschwankungen in der Abgasleitung eines Zylinders bis hin zur Auslaßöffnung eines anderen Zylinders fortpflanzen können. Der verschlechterte Ladungswechsel führt insbesondere bei steigender Last und zunehmender Drehzahl zu einem Kraftstoffmehrverbrauch.

Des Weiteren ist zu berücksichtigen, dass eine Turbine am effektivsten unter stationären Motorbetriebsbedingungen betrieben wird. Um eine stromabwärts der Zylinder im Abgassystem vorgesehene Turbine bei hohen Lasten bzw. hohen Drehzahlen, d. h. bei großen Abgasmengen optimal betreiben zu können, sollte die Turbine mit einem möglichst konstanten Abgasstrom beaufschlagt werden, weshalb unter diesen Betriebsbedingungen ein sich wenig verändernder Druck stromaufwärts der Turbine bevorzugt wird, um eine sogenannte Stauaufladung zu realisieren.

Durch ein entsprechend großes Abgasvolumen stromaufwärts der Turbine können die Druckpulsationen in den Abgasleitungen geglättet werden. Insofern erweist sich die Gruppierung der Zylinder, bei der die Abgasleitungen gruppenweise zusammengeführt werden, wodurch das Abgassystem stromaufwärts der Turbine in mehrere Teilvolumina unterteilt wird, als kontraproduktiv.

Vielmehr wäre es hinsichtlich einer Stauaufladung vorteilhaft, die Abgasleitungen sämtlicher Zylinder zu einer einzigen Gesamtabgasleitung zusammen zu führen, um das Abgasvolumen des Abgassystems stromaufwärts einer in dieser Gesamtabgasleitung angeordneten Turbine weitestgehend zu vergrößern, d. h. zu maximieren und die Druckschwankungen zu minimieren.

Bei der Optimierung einer Brennkraftmaschine für den gesamten Betriebsbereich, d. h. sowohl bei geringen Abgasmengen als auch bei größeren Abgasmengen, ergibt sich somit hinsichtlich der Gestaltung des Abgasabführsystems ein Zielkonflikt. Eine Gruppierung der Zylinder zur Realisierung einer Stoßaufladung führt zu einem günstigen Betriebsverhalten bei kleinen Abgasmengen, wohingegen bei größeren Abgasmengen ein Kraftstoffmehrverbrauch zu verzeichnen ist. Wird hingegen stromaufwärts der Turbine ein möglichst großes Abgasvolumen realisiert, um bei größeren Abgasmengen die Vorteile einer Stauaufladung nutzen zu können, verschlechtert sich das Betriebsverhalten bei kleineren Abgasmengen.

Vor dem Hintergrund des oben Gesagten ist es eine Aufgabe der vorliegenden Erfindung, einen Zylinderkopf gemäß dem Oberbegriff des Anspruchs 1, d. h. der gattungsbildenden Art bereitzustellen, der bei einer aufgeladenen Brennkraftmaschine einen optimierten Betrieb sowohl bei geringen Abgasmengen als auch bei größeren Abgasmengen ermöglicht.

Eine weitere Teilaufgabe der vorliegenden Erfindung ist es, ein Verfahren zum Betreiben einer Brennkraftmaschine mit einem derartigen Zylinderkopf aufzuzeigen.

Gelöst wird die erste Teilaufgabe durch einen Zylinderkopf mit mindestens vier Zylindern, wobei jeder Zylinder mindestens eine Auslaßöffnung zum Abführen der Abgase aus dem Zylinder aufweist und sich an jede Auslaßöffnung eine Abgasleitung anschließt, bei dem
- mindestens vier Zylinder in der Art konfiguriert sind, dass sie zwei Gruppen mit jeweils mindestens zwei Zylindern bilden, und
- die Abgasleitungen der Zylinder jeder Zylindergruppe unter Ausbildung eines Abgaskrümmers innerhalb des Zylinderkopfes jeweils zu einer Gesamtabgasleitung zusammenführen,
und der dadurch gekennzeichnet ist, dass
- die Abgaskrümmer der zwei Zylindergruppen via Verbindungsleitung miteinander verbindbar sind, wobei die Verbindungsleitung in den Zylinderkopf integriert ist und in der Verbindungsleitung ein Absperrelement angeordnet ist, welches die Verbindungsleitung für das Abgas freigibt oder verschließt, um die beiden Abgaskrümmer miteinander zu verbinden oder voneinander zu trennen.

Bei dem erfindungsgemäßen Zylinderkopf kann das Volumen des mit einer Gesamtabgasleitung kommunizierenden Abgasabführsystems variiert werden und zwar durch ein Verbinden bzw. Trennen der zwei Abgaskrümmer, die beim Zusammenführen der Abgasleitungen von mindestens vier Zylindern aufgrund einer Gruppierung dieser Zylinder ausgebildet werden.

Folglich kann auch das Abgasvolumen stromaufwärts einer Turbine, die zumindest in einer der beiden Gesamtabgasleitungen angeordnet ist, unterschiedlichen Betriebsbedingungen der Brennkraftmaschine, insbesondere unterschiedlich großen Abgasmengen, angepaßt werden und diesbezüglich optimiert werden.

Damit wird die erste der Erfindung zugrunde liegende Aufgabe gelöst, nämlich einen Zylinderkopf bereitzustellen, der bei einer aufgeladenen Brennkraftmaschine einen optimierten Betrieb sowohl bei geringen Abgasmengen als auch bei größeren Abgasmengen ermöglicht.

Der aus dem Stand der Technik bekannte Zielkonflikt, der aus den unterschiedlichen betriebspunktspezifischen Anforderungsprofilen an das stromaufwärts einer Turbine befindliche Abgasvolumen resultiert, nämlich einerseits einem kleinen Volumen bei geringeren Abgasmengen zur Realisierung einer Stoßaufladung und andererseits einem möglichst großen Volumen bei größeren Abgasmengen zum Abbau der Druckspitzen und zur Bereitstellung eines sich nur geringfügig ändernden Abgasdrucks im Rahmen einer Stauaufladung, wird aufgelöst.

Bei kleineren Abgasmengen bleiben die Abgaskrümmer der zwei Zylindergruppen voneinander getrennt, so dass jede Gesamtabgasleitung nur mit den Abgasleitungen kommuniziert, aus denen sie bei der Ausbildung des zugehörigen Abgaskrümmers hervorgeht. Das Abgasvolumen stromaufwärts einer in einer Gesamtabgasleitung angeordneten Turbine ergibt sich aus den Teilvolumina der einzelnen Abgasleitungen des zugehörigen Krümmers, wozu auch die Gesamtabgasleitung zählt und gegebenenfalls auch Teilabgasleitungen des Krümmers, die bei der Zusammenführung von Abgasleitungen eines einzelnen Zylinders gebildet werden können, wie weiter unten noch näher erläutert werden wird.

Das vergleichsweise kleine Volumen eines einzelnen Abgaskrümmers stromaufwärts der Turbine gestattet eine Stoßaufladung. Unter Ausnutzung der sich im Abgaskrümmer ausbreitenden Druckspitzen können dann bei nur geringen Abgasmengen hohe Turbinendruckverhältnisse erzielt werden. Bei Verwendung der Turbine im Rahmen einer Abgasturboaufladung können auf diese Weise hohe Ladedruckverhältnisse, d. h. hohe Ladedrücke bei nur geringen Abgasmengen generiert werden.

Die bei größeren Abgasmengen als nachteilig anzusehenden Druckschwankungen können durch Verbinden der Abgaskrümmer der zwei Zylindergruppen abgemildert, d. h. geglättet, günstigstenfalls sogar eliminiert werden.

Dabei wird das Volumen des Abgasabführsystems stromaufwärts der Turbine vergrößert. Die einer einzelnen Zylindergruppe zugeordnete Gesamtabgasleitung, in der die Turbine angeordnet ist, kommuniziert dann nicht mehr nur mit dem Abgaskrümmer der ihr zugeordneten Zylindergruppe, sondern ebenfalls mit dem Abgaskrümmer der anderen zweiten Zylindergruppe. Es wird damit ein zusätzliches Volumen bereitgestellt, wodurch sich das Abgasvolumen stromaufwärts der in der Gesamtabgasleitung angeordneten Turbine vergrößert. Diese Volumenvergrößerung gewährleistet einen sich wenig verändernden - gegebenenfalls konstanten - Abgasdruck stromaufwärts der Turbine und damit eine Stauaufladung bei größeren Abgasmengen.

Durch die beiden erfindungsgemäß miteinander verbindbaren Abgaskrümmer der zwei Zylindergruppen wird ein Wechsel zwischen Stoßaufladung und Stauaufladung möglich.

Dabei sind die Abgaskrümmer der zwei Zylindergruppen via Verbindungsleitung miteinander verbindbar, wobei in der Verbindungsleitung ein Absperrelement angeordnet ist. Es können auch mehrere Verbindungen und Absperrelemente vorgesehen werden.

Mit Hilfe des Absperrelementes wird der Strömungsquerschnitt der Verbindungsleitung verändert, insbesondere wird die Verbindungsleitung für das Abgas freigegeben bzw. verschlossen, d. h. die beiden Abgaskrümmer miteinander verbunden bzw. voneinander getrennt.

Dabei führen die Abgasleitungen der Zylinder jeder Zylindergruppe innerhalb des Zylinderkopfes jeweils zu einer Gesamtabgasleitung zusammen. Eine in der Gesamtabgasleitung vorgesehene Turbine kann dabei nahe am Auslass der Brennkraftmaschine, d. h. nahe an den Auslaßöffnungen der Zylinder angeordnet werden. Dies hat gleich mehrere Vorteile, insbesondere weil sich die Abgasleitungen zwischen den Zylindern und der Turbine verkürzen.

Da sich der Weg der heißen Abgase zur Turbine verkürzt, nimmt auch das Volumen des Abgaskrümmers stromaufwärts der Turbine ab. Die thermische Trägheit des Abgaskrümmers nimmt durch Reduzierung der Masse und der Länge der beteiligten Abgasleitungen ebenfalls ab.

Auf diese Weise kann die Abgasenthalpie der heißen Abgase, die maßgeblich vom Abgasdruck und der Abgastemperatur bestimmt wird, optimal genutzt werden und ein schnelles Ansprechverhalten der Turbine gewährleistet werden.

Die vorgeschlagene Maßnahme führt des Weiteren zu einer kompakten Bauweise des erfindungsgemäßen Zylinderkopfes und gestattet ein dichtes Packaging der gesamten Antriebseinheit.

Die Verkürzung der Leitungslängen und die damit einhergehende Verkleinerung des Abgasvolumens stromaufwärts der Turbine unterstützt die Stoßaufladung im unteren Last- bzw. Drehzahlbereich.

Die Verbindungsleitung ist in den Zylinderkopf integriert. Dies ermöglicht die einteilige Ausbildung der Krümmer und der Verbindungsleitung, beispielsweise bei der Fertigung des Zylinderkopfrohlings im Gießverfahren, was durch Einbringen eines einfachen weiteren Kerns erfolgen kann.

Damit entfällt die Ausbildung von Verbindungsstellen zwischen Krümmer und Leitung, wie sie bei einer außerhalb des Zylinderkopfes angeordneten Verbindungsleitung erforderlich ist. Dies ist vorteilhaft, weil eine Verbindungsstelle immer auch eine potentielle Leckagestelle für das unerwünschte Austreten von Abgasen darstellt und die Verbindung durch die heißen Abgase thermisch hochbelastet ist, so dass an die Ausführung der Verbindung hohe Anforderungen zu stellen wären. Bei einer Gesamtabgasleitung aus hochtemperaturfestem Werkstoff müsste die Verbindung bzw. Verbindungsleitung ebenfalls aus kostenintensivem und schwer zu bearbeitendem Material hergestellt werden.

Des Weiteren führt die Integration der Verbindungsleitung zu einer Verringerung der Anzahl an Bauteilen und zu einer kompakteren Bauweise. Letzteres unterstützt auch das Bemühen, im Motorraum ein möglichst dichtes Packaging der Antriebseinheit zu erzielen.

Bei dem erfindungsgemäßen Zylinderkopf werden die Abgasleitungen von mindestens vier Zylindern unter Ausbildung von zwei Abgaskrümmern zu zwei Gesamtabgasleitungen zusammengeführt. Insofern sind Zylinderköpfe mit fünf Zylindern, bei denen die Abgasleitungen von vier Zylindern zu zwei Gesamtabgasleitungen zusammengeführt werden, ebenfalls erfindungsgemäße Zylinderköpfe. Eine Brennkraftmaschine kann auch zwei erfindungsgemäße Zylinderköpfe aufweisen, die beispielweise auf zwei Zylinderbänke verteilt sind.

Vorteilhaft sind Ausführungsformen des Zylinderkopfes, bei denen in jeder Gesamtabgasleitung eine Turbine angeordnet ist und die Abgaskrümmer der zwei Zylindergruppen stromaufwärts dieser Turbinen miteinander verbindbar sind.

Vorteilhaft sind insbesondere Ausführungsformen des Zylinderkopfes, bei denen die beiden Gesamtabgasleitungen mit einer zweiflutigen Turbine verbunden sind, wobei jeweils eine Gesamtabgasleitung mit einem Eintrittskanal der Turbine verbunden ist, und die Abgaskrümmer der zwei Zylindergruppen stromaufwärts dieser zweiflutigen Turbine miteinander verbindbar sind.

Der Eintrittsbereich einer zweiflutigen Turbine weist zwei Eintrittskanäle auf, in die die gruppenweise zusammengefaßten Abgasleitungen der beiden Zylindergruppen, d. h. die

Gesamtabgasleitungen münden. Die Abgasströme der beiden Zylindergruppen werden dabei der Turbine getrennt voneinander zugeführt.

Mehrflutige Turbinen eignen sich insbesondere für Brennkraftmaschinen, bei denen die Abgasleitungen der Zylinder gruppenweise zusammengeführt werden, um eine Stoßaufladung zu realisieren.

Vorteilhaft sind auch Ausführungsformen, bei denen nur in einer Gesamtabgasleitung eine Turbine angeordnet ist und die Abgaskrümmer der zwei Zylindergruppen stromaufwärts dieser Turbine miteinander verbindbar sind.

Eine eingesetzte Turbine kann grundsätzlich mit einer variablen Turbinengeometrie ausgestattet werden, die durch Verstellen an den jeweiligen Betriebspunkt der Brennkraftmaschine angepaßt werden kann. Eine in der Gesamtabgasleitung angeordnete Turbine kann grundsätzlich zum Antrieb verschiedener Aggregate dienen.

Wie bereits mehrfach erwähnt eignet sich der erfindungsgemäße Zylinderkopf aber insbesondere für aufgeladene Brennkraftmaschinen, bei denen eine in der Gesamtabgasleitung angeordnete Turbine Bestandteil eines Abgasturboladers ist. Denn die betriebspunktspezifische Variation des Abgasvolumens stromaufwärts der Turbine verbessert nicht nur das Betriebsverhalten, insbesondere das Ansprechverhalten, der Turbine, sondern indirekt auch das eines mit der Turbine verbundenen Verdichters. Bei Verwendung der Turbine im Rahmen einer Abgasturboaufladung können hohe Ladedrücke bei geringen Abgasmengen erzielt werden.

Zu berücksichtigen ist des Weiteren, dass die Abgasmenge bei aufgeladenen Brennkraftmaschinen stärker variiert und die Druckschwankungen im Abgasabführsystem aufgrund des höheren maximalen Zylinderdrucks besonders ausgeprägt sind. Die aus dem Stand der Technik bekannte Problematik, die aus den im Betrieb der Brennkraftmaschine auftretenden unterschiedlich großen Abgasmengen resultiert, tritt bei aufgeladenen Brennkraftmaschinen besonders deutlich hervor. Auch aus diesem Grund eignet sich der erfindungsgemäße Zylinderkopf besonderes für aufgeladene Brennkraftmaschinen. Vorteilhaft sind Ausführungsformen, bei denen das Absperrelement ein Ventil, ein Schieber, eine Klappe oder dergleichen, ist.

Vorteilhaft sind Ausführungsformen, bei denen das Absperrelement elektrisch, hydraulisch, pneumatisch, mechanisch oder magnetisch steuerbar ist, vorzugsweise mittels der Motorsteuerung der Brennkraftmaschine.

Das Absperrelement ist vorzugsweise zweistufig schaltbar ausgeführt in der Art, dass es entweder vollständig geschlossen oder vollständig geöffnet ist, was die Steuerung vereinfacht und insbesondere Kostenvorteile bietet. Das Absperrelement kann aber auch stufenlos schaltbar sein, um einen sprunghaften Drehmomentabfall bzw. Drehmomentanstieg bei Betätigen des Absperrelements, d. h. beim Übergang von der Stoßaufladung zur Stauaufladung bzw. umgekehrt zu vermeiden.

Das Absperrelement kann in den Zylinderkopf integriert sein. Die Vorteile, welche sich aus der Integration der Verbindungsleitung in den Zylinderkopf ergeben, können in analoger Weise auf das Absperrelement bzw. die Integration des Absperrelements in den Zylinderkopf übertragen werden.

In Bezug auf die Integration des Absperrelements in den Zylinderkopf ergibt sich aber ein weiterer wesentlicher Vorteil, wenn der Zylinderkopf zur Ausbildung einer Flüssigkeitskühlung mit einem Kühlmittelmantel ausgestattet ist.

Der im Zylinderkopf integrierte Kühlmittelmantel kann zur Kühlung des thermisch hochbelasteten Absperrelements genutzt werden, was hinsichtlich der Dichtigkeit eines derartigen Elements vorteilhaft sein kann.

Aufgrund der Kühlung des Absperrelements kann gegebenenfalls auf die Verwendung kostenintensiver wärmebeständiger Werkstoffe zur Herstellung des Elements verzichtet werden. Dies ist aufgrund der hohen Abgastemperaturen insbesondere bei aufgeladenen Brennkraftmaschinen von Relevanz bzw. Vorteil.

Grundsätzlich kann das Absperrelement auch außerhalb des Zylinderkopfes vorgesehen werden, beispielsweise, falls der Zylinderkopf bereits thermisch und/oder mechanisch hoch belastet ist.

Bei Zylinderköpfen, bei denen die Abgaskrümmer der zwei Zylindergruppen via Verbindungsleitung miteinander verbindbar sind und in der Verbindungsleitung ein Absperrelement angeordnet ist, sind Ausführungsformen vorteilhaft, bei denen das Absperrelement ein Ventil ist, welches drei Anschlüsse aufweist, nämlich einen ersten Anschluß an den Abgaskrümmer der ersten Zylindergruppe, einen zweiten Anschluß an den Abgaskrümmer der zweiten Zylindergruppe und einen dritten Anschluß, an den sich eine Bypaßleitung anschließt, wobei das Ventil in einer ersten Arbeitsposition die drei Anschlüsse voneinander trennt, in einer zweiten Arbeitsposition den ersten Anschluß mit dem zweiten Anschluß verbindet und in einer dritten Arbeitsposition die drei Anschlüsse miteinander verbindet.

Die Bypaßleitung dient als sogenanntes Waste-Gate zur Abgasabblasung, auf die im Folgenden kurz eingegangen werden soll. Nach dem Stand der Technik wird ein Drehmomentabfall, der unerwünscht ist, beobachtet, sobald die Brennkraftmaschine eine bestimmte Drehzahl unterschreitet. Verständlich wird dieser Drehmomentabfall, wenn berücksichtigt wird, dass das Ladedruckverhältnis vom Turbinendruckverhältnis abhängt. Wird beispielsweise bei einem Dieselmotor die Motorendrehzahl verringert bzw. bei einem Ottomotor die Last vermindert, führt dies zu einem kleineren Abgasmassenstrom und damit zu einem kleineren Turbinendruckverhältnis mit der Folge, dass das Ladedruckverhältnis ebenfalls abnimmt, was gleichbedeutend ist mit einem Drehmomentabfall.

In der Praxis wird daher häufig ein Abgasturbolader mit einem möglichst kleinen Turbinenquerschnitt eingesetzt, um dem Abfall des Ladedruckes durch eine Verkleinerung des Turbinenquerschnittes und der damit einhergehenden Steigerung des Turbinendruckverhältnisses entgegen zu wirken. Überschreitet der Abgasmassenstrom eine kritische Größe muß dann aber ein Teil des Abgasstromes im Rahmen der sogenannten Abgasabblasung mittels einer Bypassleitung an der Turbine vorbei geführt werden, weil die Turbine mit ihrem kleinen Querschnitt auf geringe Abgasmengen ausgelegt ist.

Bei der vorliegenden Ausführungsform des Zylinderkopfes wird die Waste-Gate-Funktion von dem in der Verbindungsleitung angeordneten Absperrelement mit übernommen, gegebenenfalls für zwei Turbinen gleichzeitig, falls in jeder Gesamtabgasleitung eine einzelne Turbine vorgesehen ist. Dies führt zu erheblichen Kostenvorteilen bei den eingesetzten Turbinen, die dann mit keinem eigenen Waste-Gate mehr ausgestattet werden müssen.

Um die Funktion der Abgasabblasung zu erfüllen, ist das Absperrelement als Ventil ausgebildet und mit drei Anschlüssen versehen. Das Ventil ist einerseits an beide Abgaskrümmer angeschlossen und verbindet in einer dritten Arbeitsposition die drei Anschlüsse miteinander, d. h. die beiden Abgaskrümmer mit der Bypaßleitung, die sich an den dritten Anschluß anschließt. Auf diese Weise kann Abgas an der Turbine bzw. den Turbinen vorbeigeführt werden, wozu das Absperrelement, d.h. Ventil lediglich in die dritte Arbeitsposition zu überführen ist.

Vorteilhaft sind dabei Ausführungsformen des Zylinderkopfes, bei denen der Strömungsquerschnitt der Bypaßleitung beim Übergang von der zweiten Arbeitsposition in die dritte Arbeitsposition des Ventils stufenlos verstellbar ist. Auf diese Weise kann die abgeblasene Abgasmenge stufenlos mittels Ventil eingestellt, d. h. geregelt werden.

Bei größeren abzublasenden Abgasmengen wird ein größerer Strömungsquerschnitt benötigt als bei kleineren abzublasenden Abgasmengen, was durch Verstellen des Ventils in der dritten Arbeitsposition realisiert werden kann.

Die zweite der Erfindung zugrunde liegende Teilaufgabe, nämlich ein Verfahren zum Betreiben einer Brennkraftmaschine mit einem Zylinderkopf gemäß einer der zuvor beschriebenen Ausführungsformen aufzuzeigen, wird gelöst durch ein Verfahren, bei dem die Abgaskrümmer der zwei Zylindergruppen miteinander verbunden werden, wenn die Abgasmenge der beiden Zylindergruppen eine erste vorgebbare Abgasmenge übersteigt.

Das im Zusammenhang mit dem erfindungsgemäßen Zylinderkopf Gesagte gilt ebenfalls für das erfindungsgemäße Verfahren.

Bei einer nicht aufgeladenen Brennkraftmaschine korrespondiert die Abgasmenge näherungsweise mit der Drehzahl und/oder Last der Brennkraftmaschine und zwar abhängig von der im Einzelfall verwendeten Laststeuerung. Bei einem traditionellen Ottomotor mit Quantitätsregelung steigt die Abgasmenge auch bei konstanter Drehzahl mit zunehmender Last an, wohingegen die Abgasmenge bei traditionellen Dieselmotoren mit Qualitätsregelung lediglich drehzahlabhängig ist, weil bei Laständerung und konstanter Drehzahl die Gemischzusammensetzung, nicht jedoch die Gemischmenge variiert.

Wird der erfindungsgemäße Zylinderkopf für eine Brennkraftmaschine mit Quantitätsregelung verwendet, bei der die Last über die Menge an Frischgemisch gesteuert wird, bedeutet die erfindungsgemäße Vorgehensweise beim Betreiben dieser Brennkraftmaschine, dass die Abgaskrümmer der zwei Zylindergruppen miteinander verbunden werden, wenn - eine konkrete Drehzahl vorausgesetzt - die Last der Brennkraftmaschine eine erste vorgebbare Last übersteigt, da die Abgasmenge bei einer derartigen Brennkraftmaschine mit der Last korrespondiert, wobei die Abgasmenge mit zunehmender Last steigt und mit abnehmender Last sinkt.

Liegt der Brennkraftmaschine hingegen eine Qualitätsregelung zugrunde, bei der die Last über die Zusammensetzung des Frischgemischs gesteuert wird und sich die Abgasmenge nahezu ausschließlich mit der Drehzahl ändert d. h. proportional zur Drehzahl ist, werden gemäß dem erfindungsgemäßen Verfahren zum Betreiben dieser Brennkraftmaschine die Abgaskrümmer der zwei Zylindergruppen miteinander verbunden, wenn die Drehzahl der Brennkraftmaschine eine erste vorgebbare Drehzahl übersteigt, da die Abgasmenge vorliegend mit zunehmender Drehzahl steigt und mit abnehmender Drehzahl sinkt.

Handelt es sich um eine - insbesondere mittels Abgasturboaufladung - aufgeladene Brennkraftmaschine, muß zusätzlich berücksichtigt werden, dass sich der Ladedruck auf der Ansaugseite mit der Last und/oder der Drehzahl ändern kann und Einfluß auf die Abgasmenge hat. Die vorstehenden und vereinfacht dargestellten Zusammenhänge zwischen der Abgasmenge und der Last bzw. Drehzahl gelten dann folglich nicht in dieser allgemeinen Form. Daher stellt das erfindungsgemäße Verfahren ganz allgemein auf die Abgasmenge ab und nicht auf die Last bzw. Drehzahl.

Wenn die Abgasmenge der beiden Zylindergruppen die erste vorgebbare Abgasmenge wieder unterschreitet, werden die Abgaskrümmer erneut voneinander getrennt.

Vorteilhaft sind Verfahrensvarianten, bei denen die Abgaskrümmer der zwei Zylindergruppen miteinander verbunden werden, wenn die Abgasmenge der beiden Zylindergruppen die erste vorgebbare Abgasmenge übersteigt und für eine vorgebbare Zeitspanne Δt₁ größer ist als diese erste vorgebbare Abgasmenge.

Die Einführung einer zusätzlichen Bedingung für das Verbinden der beiden Abgaskrümmer soll einen zu häufigen Moduswechsel zwischen Stoßaufladung und Stauaufladung verhindern, insbesondere einen Übergang zur Stauaufladung, wenn die Abgasmenge nur kurzzeitig die erste vorgebbare Abgasmenge überschreitet und dann wieder fällt bzw. um den ersten vorgegebenen Wert für die Abgasmenge schwankt, ohne dass das Überschreiten einen Übergang zu Stauaufladung rechtfertigen würde.

Aus den zuvor genannten Gründen sind auch Verfahrensvarianten vorteilhaft, bei denen die Abgaskrümmer der zwei Zylindergruppen voneinander getrennt werden, wenn die Abgasmenge der beiden Zylindergruppen die erste vorgebbare Abgasmenge unterschreitet und für eine vorgebbare Zeitspanne Δt₂ kleiner ist als diese erste vorgebbare Abgasmenge.

Bei Zylinderköpfen, bei denen die Abgaskrümmer der zwei Zylindergruppen via Verbindungsleitung miteinander verbindbar sind und in der Verbindungsleitung ein Absperrelement angeordnet ist, sind Verfahrensvarianten vorteilhaft, die dadurch gekennzeichnet sind, dass das in der Verbindungsleitung angeordnete Absperrelement geöffnet wird, wenn die Abgasmenge der beiden Zylindergruppen die erste vorgebbare Abgasmenge übersteigt, wodurch die Abgaskrümmer der zwei Zylindergruppen via Verbindungsleitung miteinander verbunden werden.

Bezüglich der Einführung zusätzlicher Bedingungen, insbesondere der Vorgabe einer Zeitspanne Δt₁ bzw. Δt₂, und dem Trennen der beiden Krümmer wird Bezug genommen auf die vorstehenden Ausführungen, die auch für die folgenden Verfahrensvarianten Gültigkeit haben.

Verfügt der Zylinderkopf über ein Ventil als Absperrelement, welches drei Anschlüsse aufweist, nämlich einen ersten Anschluß an den Abgaskrümmer der ersten Zylindergruppe, einen zweiten Anschluß an den Abgaskrümmer der zweiten Zylindergruppe und einen dritten Anschluß, an den sich eine Bypaßleitung anschließt, wobei das Ventil in einer ersten Arbeitsposition die drei Anschlüsse voneinander trennt, in einer zweiten Arbeitsposition den ersten Anschluß mit dem zweiten Anschluß verbindet und in einer dritten Arbeitsposition die drei Anschlüsse miteinander verbindet, sind Verfahrensvarianten vorteilhaft, die dadurch gekennzeichnet sind, dass das in der Verbindungsleitung angeordnete Ventil von der ersten Arbeitsposition in die zweite Arbeitsposition überführt wird, wenn die Abgasmenge der beiden Zylindergruppen die erste vorgebbare Abgasmenge übersteigt, wodurch die Abgaskrümmer der zwei Zylindergruppen via Verbindungsleitung miteinander verbunden werden.

Vorteilhaft ist es dabei, wenn das in der Verbindungsleitung angeordnete Ventil im Rahmen eines weiteren Verfahrensschrittes von der zweiten Arbeitsposition in die dritte Arbeitsposition überführt wird, wenn die Abgasmenge der beiden Zylindergruppen eine zweite vorgebbare Abgasmenge übersteigt, wodurch die Abgaskrümmer der zwei Zylindergruppen mit der Bypaßleitung verbunden werden.

Überschreitet der Abgasmassenstrom der beiden Zylindergruppen eine kritische Größe, d. h. eine zweite vorgebbare Abgasmenge werden die Krümmer mit der Bypaßleitung verbunden und ein Teil des Abgasstromes an der mindestens einen in den beiden Gesamtabgasleitung vorgesehenen Turbine vorbei geführt.

Es sind auch Verfahrensvarianten vorteilhaft, bei denen die Abgaskrümmer der zwei Zylindergruppen voneinander getrennt werden, wenn die Abgasmenge der beiden Zylindergruppen eine erste vorgebbare Abgasmenge unterschreitet und für eine vorgebbare Zeitspanne Δt₂ kleiner ist als diese erste vorgebbare Abgasmenge.

Wenn die Abgasmenge der beiden Zylindergruppen dann die zweite vorgebbare Abgasmenge unterschreitet, wird das Ventil wieder von der dritten Arbeitsposition in die zweite Arbeitsposition überführt. Dadurch werden die Abgaskrümmer wieder von der Bypaßleitung getrennt.

Für das Verbinden der beiden Krümmer mit der Bypaßleitung bzw. dem Trennen, d. h. bezüglich einer Überführung des Ventils von der zweiten Arbeitsposition in die dritte Arbeitsposition bzw. umgekehrt können zusätzliche Bedingungen formuliert werden. Insbesondere kann eine Zeitspanne Δt₃ bzw. Δt₄ vorgegeben werden, für welche die zweite vorgebbare Abgasmenge zu überschreiten bzw. unterschreiten ist, bevor ein Moduswechsel erfolgt.

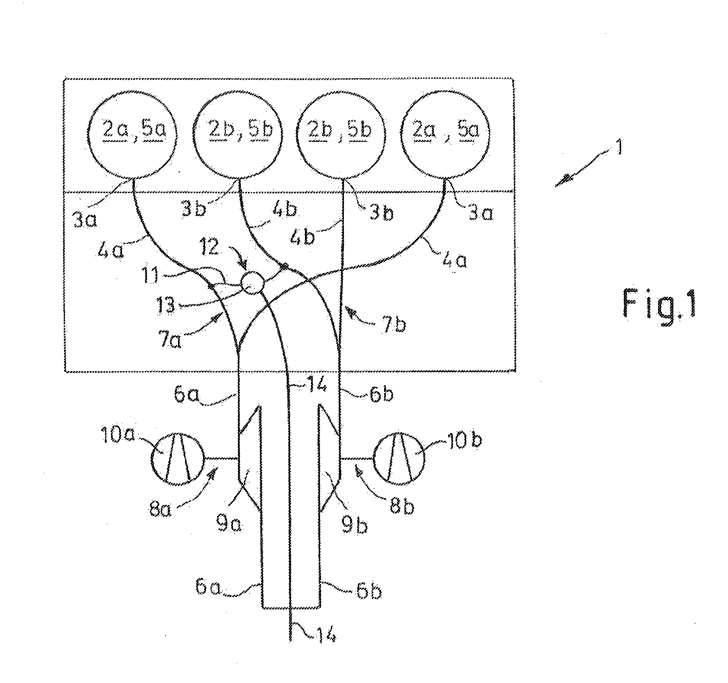

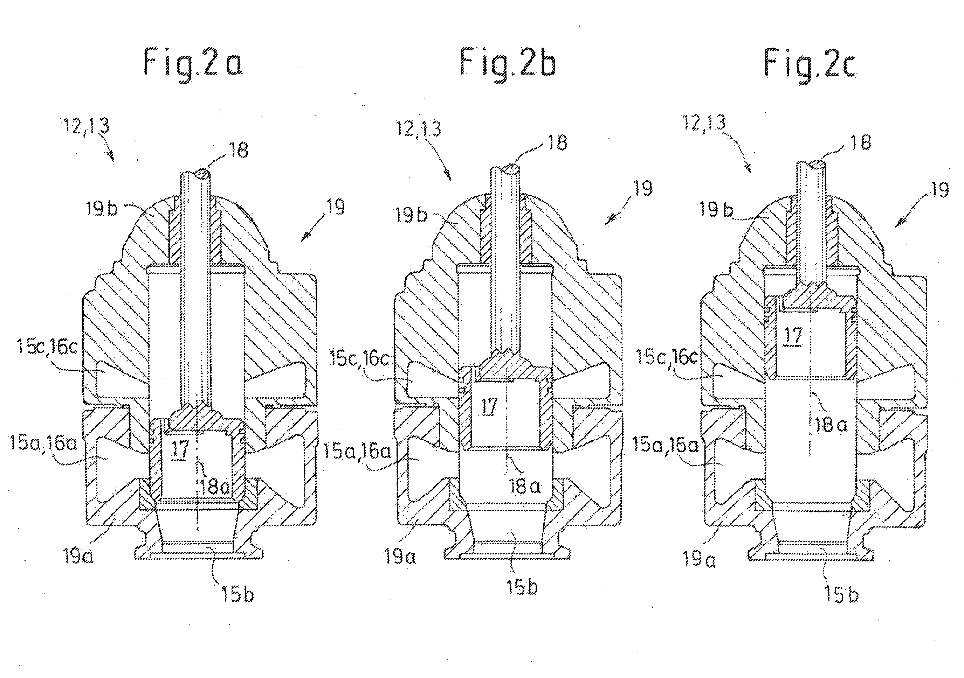

Im Folgenden wird die Erfindung anhand eines Ausführungsbeispiels gemäß den Figuren 1, 2a, 2b und 2c näher beschrieben. Hierbei zeigt:
- Fig. 1: schematisch eine erste Ausführungsform des Zylinderkopfes in Kombination mit zwei Abgasturboladern,
- Fig. 2a: schematisch das Ventil der in Figur 1 dargestellten Ausführungsform des Zylinderkopfes in einer ersten Arbeitsposition,
- Fig. 2b: schematisch das Ventil der in Figur 1 dargestellten Ausführungsform des Zylinderkopfes in einer zweiten Arbeitsposition, und
- Fig. 2c: schematisch das Ventil der in Figur 1 dargestellten Ausführungsform des Zylinderkopfes in einer dritten Arbeitsposition.

Figur 1 zeigt schematisch eine erste Ausführungsform des Zylinderkopfes 1 in Kombination mit zwei Abgasturboladern 8a, 8b.

Bei dem in Figur 1 dargestellten Zylinderkopf 1 handelt es sich um den Zylinderkopf 1 eines Vier-Zylinder-Reihenmotors, bei dem die Zylinder 2a, 2b entlang der Längsachse des Zylinderkopfes 1 angeordnet sind. Jeder der vier Zylinder 2a, 2b ist mit einer Auslaßöffnung 3a, 3b ausgestattet, wobei sich an jede Auslaßöffnung 3a, 3b eine Abgasleitung 4a, 4b zum Abführen der Abgase aus dem Zylinder 2a, 2b anschließt.

Die vier Zylinder 2a, 2b sind in der Art konfiguriert, dass sie zwei Gruppen 5a, 5b mit jeweils zwei Zylindern 2a, 2b bilden. Die erste Zylindergruppe 5a umfaßt die beiden außenliegenden Zylinder 2a und die zweite Zylindergruppe 5b die beiden innenliegenden Zylinder 2b, wobei die Abgasleitungen 4a der beiden außenliegenden Zylinder 2a der ersten Zylindergruppe 5a unter Ausbildung eines ersten Abgaskrümmers 7a innerhalb des Zylinderkopfes 1 zu einer ersten Gesamtabgasleitung 6a und die Abgasleitungen 4b der beiden innenliegenden Zylinder 2b der zweiten Zylindergruppe 5b innerhalb des Zylinderkopfes 1 unter Ausbildung eines zweiten Abgaskrümmers 7b zu einer zweiten Gesamtabgasleitung 6b zusammenführen.

In jeder der beiden Gesamtabgasleitungen 6a, 6b ist die Turbine 9a, 9b eines Abgasturboladers 8a, 8b angeordnet, welcher neben der Turbine 9a, 9b einen Verdichter 10a, 10b zur Kompression der Ladeluft umfaßt. Vorliegend führen die Gesamtabgasleitungen 6a, 6b stromabwärts der Turbine 9a, 9b zusammen.

Die Abgaskrümmer 7a, 7b der beiden Zylindergruppen 5a, 5b sind stromaufwärts der Turbinen 9a, 9b via Verbindungsleitung 11 miteinander verbindbar, wobei die Verbindungsleitung 11 bei der in Figur 1 dargestellten Ausführungsform in den Zylinderkopf 1 integriert ist und zwei Abgasleitungen 4a, 4b miteinander verbindet. In der Verbindungsleitung 11 ist ein als Absperrelement 12 dienendes Ventil 13 angeordnet, welches nicht nur über Anschlüsse an die beiden Abgaskrümmer 7a, 7b verfügt, sondern einen Anschluß aufweist, an den sich eine Bypaßleitung 14 anschließt, die dem Abblasen von Abgas bei Umgehung der Turbinen 9a, 9b dient.

Aufgrund der gruppenweisen Zusammenführung der Abgasleitungen 4a, 4b innerhalb des Zylinderkopfes 1 können die beiden Turbinen 9a, 9b motornah, d. h. unmittelbar benachbart zum Zylinderkopf 1 angeordnet werden. Dadurch wird die Ausbildung ein kleines Abgasvolumens stromaufwärts der Turbinen 9a, 9b bei voneinander getrennten Abgaskrümmer 7a, 7b unterstützt, was vorteilhaft ist im Hinblick auf eine Stoßaufladung bei kleinen Abgasmengen. Der Übergang zur Stauaufladung erfolgt durch Verbinden der beiden Abgaskrümmer 7a, 7b, sobald die Abgasmenge der beiden Zylindergruppen 5a, 5b eine erste vorgebbare Abgasmenge übersteigt. Dadurch vergrößert sich das Volumen des Abgasabführsystems stromaufwärts der Turbinen 9a, 9b und Druckpulsationen werden geglättet.

Figur 2a zeigt schematisch das Ventil 13 der in Figur 1 dargestellten Ausführungsform des Zylinderkopfes 1 in einer ersten Arbeitsposition.

Das als Absperrelement 12 dienende Ventil 13 verfügt über drei Anschlüsse 15a, 15b, 15c und einen mittels Kolbenstange 18 entlang einer Kolbenlängsachse 18a translatorisch verschiebbaren Steuerkolben 17, der beweglich in einem zweiteiligen Ventilgehäuse 19 gelagert ist und die Anschlüsse 15a, 15b, 15c freigeben und verschließen kann.

Ein im unteren Ventilgehäuseteil 19a integrierter Ringkanal 16a bildet den ersten Anschluß 15a, welcher mit dem Abgaskrümmer der ersten Zylindergruppe in Verbindung steht. Der zweite ebenfalls im unteren Ventilgehäuseteil 19a angeordnete Anschluß 15b führt zum Abgaskrümmer der zweiten Zylindergruppe. Der dritte Anschluß 15c, an den sich eine Bypaßleitung zur Abgasabblasung anschließt, ist wieder als Ringkanal 16c ausgebildet und in den oberen Ventilgehäuseteil 19b integriert.

Bei der in Figur 2a dargestellten ersten Arbeitsposition des Steuerkolbens 17 sind die drei Anschlüsse 15a, 15b, 15c und damit auch die Abgaskrümmer der zwei Zylindergruppen voneinander getrennt. Es wird kein Abgas abgeblasen.

Jede Gesamtabgasleitung kommuniziert nur mit den Abgasleitungen, aus denen sie bei der Ausbildung des Abgaskrümmers hervorgeht. Das Abgasvolumen stromaufwärts der in einer Gesamtabgasleitung angeordneten Turbine ergibt sich aus den Teilvolumina der einzelnen Abgasleitungen des zugehörigen Krümmers, wozu auch die Gesamtabgasleitung zählt. Das vergleichsweise kleine Volumen eines einzelnen Abgaskrümmers stromaufwärts der Turbine begünstigt eine Stoßaufladung.

Figur 2b zeigt schematisch das Ventil 13 der in Figur 1 dargestellten Ausführungsform des Zylinderkopfes 1 in einer zweiten Arbeitsposition.

Es sollen nur die Unterschiede zu der in Figur 2a dargestellten Arbeitsposition erörtert werden, weshalb im Übrigen Bezug genommen wird auf Figur 2a. Für dieselben Bauteile wurden dieselben Bezugszeichen verwendet.

In der zweiten Arbeitsposition sind der erste Anschluß 15a und der zweite Anschluß 15b und damit auch die Abgaskrümmer der zwei Zylindergruppen miteinander verbunden, was durch Verschieben des Steuerkolbens 17 erreicht wird.

Dadurch wird das Volumen des Abgasabführsystems stromaufwärts jeder Turbine vergrößert. Die einer Turbine zugeordnete Gesamtabgasleitung kommuniziert in der zweiten Arbeitsposition mit dem Abgaskrümmer der ihr zugeordneten Zylindergruppe und ebenfalls mit dem Abgaskrümmer der anderen Zylindergruppe. Die Volumenvergrößerung gewährleistet eine Glättung der Druckschwankungen stromaufwärts der Turbinen und damit eine Stauaufladung bei größeren Abgasmengen.

Figur 2c zeigt schematisch das Ventil 13 der in Figur 1 dargestellten Ausführungsform des Zylinderkopfes 1 in einer dritten Arbeitsposition.

Es sollen nur die Unterschiede zu den in den Figuren 2a und 2b dargestellten Arbeitspositionen erörtert werden, weshalb im Übrigen Bezug genommen wird auf Figur 2a bzw. 2b. Für dieselben Bauteile wurden dieselben Bezugszeichen verwendet.

In der dritten Arbeitsposition sind alle drei Anschlüsse 15a, 15b, 15c miteinander verbunden d. h. die Abgaskrümmer der zwei Zylindergruppen sind miteinander, aber auch mit der Bypaßleitung verbunden. Es wird somit Abgas via Bypaßleitung abgeblasen.

### Bezugszeichen

- 1: Zylinderkopf
- 2a: Zylinder
- 2b: Zylinder
- 3a: Auslaßöffnung
- 3b: Auslaßöffnung
- 4a: Abgasleitung
- 4b: Abgasleitung
- 5a: erste Zylindergruppe
- 5b: zweite Zylindergruppe
- 6a: erste Gesamtabgasleitung
- 6b: zweite Gesamtabgasleitung
- 7a: erster Abgaskrümmer
- 7b: zweiter Abgaskrümmer
- 5a: erste Zylindergruppe
- 5b: zweite Zylindergruppe
- 6a: erste Gesamtabgasleitung
- 6b: zweite Gesamtabgasleitung
- 7a: erster Abgaskrümmer
- 7b: zweiter Abgaskrümmer
- 8a: erster Abgasturbolader
- 8b: zweiter Abgaskrümmer
- 9a: erste Turbine
- 9b: zweite Turbine
- 10a: erster Verdichter
- 10b: zweiter Verdichter
- 11: Verbindungsleitung
- 12: Absperrelement
- 13: Ventil
- 14: Bypaßleitung
- 15a: erster Anschluß
- 15b: zweiter Anschluß
- 15c: dritter Anschluß
- 16a: Ringkanal
- 16c: Ringkanal
- 17: Steuerkolben
- 18: Kolbenstange
- 18a: Kolbenlängsachse
- 19: Ventilgehäuse
- 19a: unterer Ventilgehäuseteil
- 19b: oberer Ventilgehäuseteil

## Patentansprüche

1. Zylinderkopf (1) mit mindestens vier Zylindern (2a, 2b), wobei jeder Zylinder (2a, 2b) mindestens eine Auslaßöffnung (3a, 3b) zum Abführen der Abgase aus dem Zylinder (2a, 2b) aufweist und sich an jede Auslaßöffnung (3a, 3b) eine Abgasleitung (4a, 4b) anschließt, bei dem
- mindestens vier Zylinder (2a, 2b) in der Art konfiguriert sind, dass sie zwei Gruppen (5a, 5b) mit jeweils mindestens zwei Zylindern (2a, 2b) bilden, und
- die Abgasleitungen (4a, 4b) der Zylinder (2a, 2b) jeder Zylindergruppe (5a, 5b) unter Ausbildung eines Abgaskrümmers (7a, 7b) innerhalb des Zylinderkopfes (1) jeweils zu einer Gesamtabgasleitung (6a, 6b) zusammenführen,
**dadurch gekennzeichnet, dass**
- die Abgaskrümmer (7a, 7b) der zwei Zylindergruppen (5a, 5b) via Verbindungsleitung (11) miteinander verbindbar sind, wobei die Verbindungsleitung (11) in den Zylinderkopf (1) integriert ist und in der Verbindungsleitung (11) ein Absperrelement (12) angeordnet ist, welches die Verbindungsleitung (11) für das Abgas freigibt oder verschließt, um die beiden Abgaskrümmer (7a, 7b) miteinander zu verbinden oder voneinander zu trennen.

2. Zylinderkopf (1) nach Anspruch 1, **dadurch gekennzeichnet, dass** in jeder Gesamtabgasleitung (6a, 6b) eine Turbine (9a, 9b) angeordnet ist und die Abgaskrümmer (7a, 7b) der zwei Zylindergruppen (5a, 5b) stromaufwärts dieser Turbinen (9a, 9b) miteinander verbindbar sind.

3. Zylinderkopf (1) nach Anspruch 1, **dadurch gekennzeichnet, dass** die beiden Gesamtabgasleitungen (6a, 6b) mit einer zweiflutigen Turbine verbunden sind, wobei jeweils eine Gesamtabgasleitung (6a, 6b) mit einem Eintrittskanal der Turbine verbunden ist, und die Abgaskrümmer (7a, 7b) der zwei Zylindergruppen (5a, 5b) stromaufwärts dieser zweiflutigen Turbine miteinander verbindbar sind.

4. Zylinderkopf (1) nach einem der vorherigen Ansprüche, **dadurch gekennzeichnet, dass** das Absperrelement (12) ein Ventil (13) ist, welches drei Anschlüsse (15a, 15b, 15c) aufweist, nämlich einen ersten Anschluß (15a) an den Abgaskrümmer (7a) der ersten Zylindergruppe (5a), einen zweiten Anschluß (15b) an den Abgaskrümmer (7b) der zweiten Zylindergruppe (5b) und einen dritten Anschluß (15c), an den sich eine Bypaßleitung (14) anschließt, wobei das Ventil (13) in einer ersten Arbeitsposition die drei Anschlüsse (15a, 15b, 15c) voneinander trennt, in einer zweiten Arbeitsposition den ersten Anschluß (15a) mit dem zweiten Anschluß (15b) verbindet und in einer dritten Arbeitsposition die drei Anschlüsse (15a, 15b, 15c) miteinander verbindet.

5. Zylinderkopf (1) nach Anspruch 4, **dadurch gekennzeichnet, dass** der Strömungsquerschnitt der Bypaßleitung (14) beim Übergang von der zweiten Arbeitsposition in die dritte Arbeitsposition des Ventils (13) stufenlos verstellbar ist.

6. Verfahren zum Betreiben einer Brennkraftmaschine mit einem Zylinderkopf (1) gemäß einem der vorherigen Ansprüche, **dadurch gekennzeichnet, dass** die Abgaskrümmer (7a, 7b) der zwei Zylindergruppen (5a, 5b) miteinander verbunden werden, wenn die Abgasmenge der beiden Zylindergruppen (5a, 5b) eine erste vorgebbare Abgasmenge übersteigt.

7. Verfahren nach Anspruch 6 zum Betreiben einer Brennkraftmaschine mit einem Zylinderkopf (1) gemäß einem der Ansprüche 1 bis 5, **dadurch gekennzeichnet, dass** das in der Verbindungsleitung (11) angeordnete Absperrelement (12) geöffnet wird, wenn die Abgasmenge der beiden Zylindergruppen (5a, 5b) die erste vorgebbare Abgasmenge übersteigt, wodurch die Abgaskrümmer (7a, 7b) der zwei Zylindergruppen (5a, 5b) via Verbindungsleitung (11) miteinander verbunden werden.

8. Verfahren nach Anspruch 6 zum Betreiben einer Brennkraftmaschine mit einem Zylinderkopf (1) gemäß Anspruch 4 oder 5, **dadurch gekennzeichnet, dass** das in der Verbindungsleitung (11) angeordnete Ventil (13) von der ersten Arbeitsposition in die zweite Arbeitsposition überführt wird, wenn die Abgasmenge der beiden Zylindergruppen (5a, 5b) die erste vorgebbare Abgasmenge übersteigt, wodurch die Abgaskrümmer (7a, 7b) der zwei Zylindergruppen (5a, 5b) via Verbindungsleitung (11) miteinander verbunden werden.

9. Verfahren nach Anspruch 8, **dadurch gekennzeichnet, dass** das in der Verbindungsleitung (11) angeordnete Ventil (13) von der zweiten Arbeitsposition in die dritte Arbeitsposition überführt wird, wenn die Abgasmenge der beiden Zylindergruppen (5a, 5b) eine zweite vorgebbare Abgasmenge übersteigt, wodurch die Abgaskrümmer (7a, 7b) der zwei Zylindergruppen (5a, 5b) mit der Bypaßleitung (14) verbunden werden.

## Claims

1. Cylinder head (1) having at least four cylinders (2a, 2b), with each cylinder (2a, 2b) having at least one outlet opening (3a, 3b) for discharging the exhaust gases out of the cylinder (2a, 2b) and with each outlet opening (3a, 3b) being adjoined by an exhaust line (4a, 4b), in which cylinder head
- at least four cylinders (2a, 2b) are configured in such a way as to form two groups (5a, 5b) with in each case at least two cylinders (2a, 2b) and
- the exhaust lines (4a, 4b) of the cylinders (2a, 2b) of each cylinder group (5a, 5b) merge in each case into an overall exhaust line (6a, 6b) within the cylinder head (1) so as to form an exhaust manifold (7a, 7b),
**characterized in that**
- the exhaust manifolds (7a, 7b) of the two cylinder groups (5a, 5b) can be connected to one another via connecting line (11), wherein the connecting line (11) is integrated in the cylinder head (1), and a shut-off element (12) is arranged in the connecting line (11) and frees or closes the connecting line (11) for the exhaust gas in order to connect the two exhaust manifolds (7a, 7b) to each other or to separate them from each other.

2. Cylinder head (1) according to Claim 1, **characterized in that** a turbine (9a, 9b) is arranged in each overall exhaust line (6a, 6b), and the exhaust manifolds (7a, 7b) of the two cylinder groups (5a, 5b) can be connected to one another upstream of said turbines (9a, 9b).

3. Cylinder head (1) according to Claim 1, **characterized in that** the two overall exhaust lines (6a, 6b) are connected to a twin-channel turbine, with in each case one overall exhaust line (6a, 6b) being connected to one inlet duct of the turbine, and with it being possible for the exhaust manifolds (7a, 7b) of the two cylinder groups (5a, 5b) to be connected to one another upstream of said twin-channel turbine.

4. Cylinder head (1) according to one of the preceding claims, **characterized in that** the shut-off element (12) is a valve (13) which has three ports (15a, 15b, 15c), specifically a first port (15a) to the exhaust manifold (7a) of the first cylinder group (5a), a second port (15b) to the exhaust manifold (7b) of the second cylinder group (5b), and a third port (15c) which is adjoined by a bypass line (14), with the valve (13), in a first working position, separating the three ports (15a, 15b, 15c) from one another, in a second working position, connecting the first port (15a) to the second port (15b), and in a third working position, connecting the three ports (15a, 15b, 15c) to one another.

5. Cylinder head (1) according to Claim 4, **characterized in that** the flow cross section of the bypass line (14) can be adjusted in a continuously variable fashion during the transition from the second working position into the third working position of the valve (13).

6. Method for operating an internal combustion engine having a cylinder head (1) according to one of the preceding claims, **characterized in that** the exhaust manifolds (7a, 7b) of the two cylinder groups (5a, 5b) are connected to one another if the exhaust-gas quantity of the two cylinder groups (5a, 5b) exceeds a first predefinable exhaust-gas quantity.

7. Method according to Claim 6 for operating an internal combustion engine having a cylinder head (1) according to one of Claims 1 to 5, **characterized in that** the shut-off element (12) which is arranged in the connecting line (11) is opened if the exhaust-gas quantity of the two cylinder groups (5a, 5b) exceeds the first predefinable exhaust-gas quantity, as a result of which the exhaust manifolds (7a, 7b) of the two cylinder groups (5a, 5b) are connected to one another via the connecting line (11).

8. Method according to Claim 6 for operating an internal combustion engine having a cylinder head (1) according to Claim 4 or 5, **characterized in that** the valve (13) which is arranged in the connecting line (11) is switched from the first working position into the second working position if the exhaust-gas quantity of the two cylinder groups (5a, 5b) exceeds the first predefinable exhaust-gas quantity, as a result of which the exhaust manifolds (7a, 7b) of the two cylinder groups (5a, 5b) are connected to one another via the connecting line (11).

9. Method according to Claim 8, **characterized in that** the valve (13) which is arranged in the connecting line (11) is switched from the second working position into the third working position if the exhaust-gas quantity of the two cylinder groups (5a, 5b) exceeds a second predefinable exhaust-gas quantity, as a result of which the exhaust manifolds (7a, 7b) of the two cylinder groups (5a, 5b) are connected to the bypass line (14).

## Revendications

1. Culasse (1) comprenant au moins quatre cylindres (2a, 2b), chaque cylindre (2a, 2b) présentant au moins une ouverture de sortie (3a, 3b) pour évacuer les gaz d'échappement hors du cylindre (2a, 2b) et une conduite de gaz d'échappement (4a, 4b) se raccordant à chaque ouverture de sortie (3a, 3b),
- au moins quatre cylindres (2a, 2b) étant configurés de telle sorte qu'ils forment deux groupes (5a, 5b) avec à chaque fois au moins deux cylindres (2a, 2b), et
- les conduites de gaz d'échappement (4a, 4b) des cylindres (2a, 2b) de chaque groupe de cylindres (5a, 5b) étant réunies à chaque fois en une conduite de gaz d'échappement globale (6a, 6b) en formant un collecteur de gaz d'échappement (7a, 7b) à l'intérieur de la culasse (1),
**caractérisée en ce que**
- les collecteurs de gaz d'échappement (7a, 7b) des deux groupes de cylindres (5a, 5b) peuvent être connectés l'un à l'autre par le biais d'une conduite de connexion (11), la conduite de connexion (11) étant intégrée dans la culasse (1) et un élément de blocage (12) étant disposé dans la conduite de connexion (11), lequel libère ou ferme la conduite de connexion (11) pour le gaz d'échappement, afin de relier l'un à l'autre ou de séparer l'un de l'autre les deux collecteurs de gaz d'échappement (7a, 7b) .

2. Culasse (1) selon la revendication 1, **caractérisée en ce que** dans chaque conduite de gaz d'échappement globale (6a, 6b) est disposée une turbine (9a, 9b) et les collecteurs de gaz d'échappement (7a, 7b) des deux groupes de cylindres (5a, 5b) peuvent être connectés l'un à l'autre en amont de ces turbines (9a, 9b).

3. Culasse (1) selon la revendication 1, **caractérisée en ce que** les deux conduites de gaz d'échappement globales (6a, 6b) sont connectées à une turbine à deux flux, une conduite de gaz d'échappement globale (6a, 6b) étant à chaque fois connectée à un canal d'entrée de la turbine, et les collecteurs de gaz d'échappement (7a, 7b) des deux groupes de cylindres (5a, 5b) pouvant être connectés l'un à l'autre en amont de cette turbine à deux flux.

4. Culasse (1) selon l'une quelconque des revendications précédentes, **caractérisée en ce que** l'élément de blocage (12) est une soupape (13) qui présente trois raccords (15a, 15b, 15c), à savoir un premier raccord (15a) au niveau du collecteur de gaz d'échappement (7a) du premier groupe de cylindres (5a), un deuxième raccord (15b) au niveau du collecteur de gaz d'échappement (7b) du deuxième groupe de cylindres (5b) et un troisième raccord (15c) auquel se raccorde une conduite de dérivation (14), la soupape (13), dans une première position de travail, séparant les trois raccords (15a, 15b, 15c) les uns des autres, dans une deuxième position de travail, reliant le premier raccord (15a) au deuxième raccord (15b), et dans une troisième position de travail, reliant entre eux les trois raccords (15a, 15b, 15c).

5. Culasse (1) selon la revendication 4, **caractérisée en ce que** la section transversale d'écoulement de la conduite de dérivation (14), lors du passage de la deuxième position de travail à la troisième position de travail de la soupape (13), peut être réglée en continu.

6. Procédé pour faire fonctionner un moteur à combustion interne avec une culasse (1) selon l'une quelconque des revendications précédentes, **caractérisé en ce que** les collecteurs de gaz d'échappement (7a, 7b) des deux groupes de cylindres (5a, 5b) sont connectés l'un à l'autre, lorsque la quantité de gaz d'échappement des deux groupes de cylindres (5a, 5b) dépasse une première quantité de gaz d'échappement prédéfinissable.

7. Procédé selon la revendication 6 pour faire fonctionner un moteur à combustion interne avec une culasse (1) selon l'une quelconque des revendications 1 à 5, **caractérisé en ce que** l'élément de blocage (12) disposé dans la conduite de connexion (11) est ouvert lorsque la quantité de gaz d'échappement des deux groupes de cylindres (5a, 5b) dépasse la première quantité de gaz d'échappement prédéfinissable, de sorte que les collecteurs de gaz d'échappement (7a, 7b) des deux groupes de cylindres (5a, 5b) soient connectés l'un à l'autre par le biais de la conduite de connexion (11).

8. Procédé selon la revendication 6 pour faire fonctionner un moteur à combustion interne avec une culasse (1) selon la revendication 4 ou 5, **caractérisé en ce que** la soupape (13) disposée dans la conduite de connexion (11) est transférée de la première position de travail à la deuxième position de travail lorsque la quantité de gaz d'échappement des deux groupes de cylindres (5a, 5b) dépasse la première quantité de gaz d'échappement prédéfinissable, de sorte que les collecteurs de gaz d'échappement (7a, 7b) des deux groupes de cylindres (5a, 5b) soient connectés l'un à l'autre par le biais de la conduite de connexion (11).

9. Procédé selon la revendication 8, **caractérisé en ce que** la soupape (13) disposée dans la conduite de connexion (11) est transférée de la deuxième position de travail à la troisième position de travail lorsque la quantité de gaz d'échappement des deux groupes de cylindres (5a, 5b) dépasse une deuxième quantité de gaz d'échappement prédéfinissable, de sorte que les collecteurs de gaz d'échappement (7a, 7b) des deux groupes de cylindres (5a, 5b) soient connectés à la conduite de dérivation (14).
